(19) Europäisches Patentamt
European Patent Office
Office européen des brevets

(11) Veröffentlichungsnummer: **0 254 857 B1**

# (12) EUROPÄISCHE PATENTSCHRIFT

(45) Veröffentlichungstag der Patentschrift: **07.04.93**

(51) Int. Cl.[5]: **A01N 43/653**

(21) Anmeldenummer: **87108740.9**

(22) Anmeldetag: **19.06.87**

## (54) Verwendung von 1-Aryl-3-hydroxy-3-alkyl-4-(1,2,4-triazol-1-yl)-butan-derivaten als Mikrobizide für den Materialschutz.

(30) Priorität: **27.06.86 DE 3621494**

(43) Veröffentlichungstag der Anmeldung:
**03.02.88 Patentblatt 88/05**

(45) Bekanntmachung des Hinweises auf die Patenterteilung:
**07.04.93 Patentblatt 93/14**

(84) Benannte Vertragsstaaten:
**BE CH DE FR GB IT LI NL SE**

(56) Entgegenhaltungen:
**EP-A- 0 040 345**
**EP-A- 0 052 424**
**EP-A- 0 131 684**

(73) Patentinhaber: **BAYER AG**

**W-5090 Leverkusen 1 Bayerwerk(DE)**

(72) Erfinder: **Büchel, Karl Heinz, Prof. Dr.**
**Dabringhausener Strasse 42**
**W-5093 Burscheid(DE)**
Erfinder: **Holmwood, Graham, Dr.**
**Krutscheider Weg 105**
**W-5600 Wuppertal 11(DE)**
Erfinder: **Paulus, Wilfried, Dr.**
**Deswatinesstrasse 90**
**W-4150 Krefeld(DE)**
Erfinder: **Schmitt, Hans-Georg, Dr.**
**Am Oberend 13**
**W-4150 Krefeld(DE)**

EP 0 254 857 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft die Verwendung von 1-Aryl-3-hydroxy-3-alkyl-4-(1,2,4-triazol-1-yl)-butan-derivaten als Wirkstoffe in mikrobiziden Mitteln zum Schutz technischer Materialien.

Es ist bekannt, daß Triazol- und Imidazol-Fungizide für den Schutz von Pflanzen und Saatgut verwendet werden können (vgl. EP 0 040 345 EP 0 131 684). Es ist aber auch bekannt, daß diese Fungizide Wirkungslücken aufweisen (vgl. EP 0 180 313). Sie sind daher ungeeignet für den Schutz technischer Materialien gegen Pilzbefall, da technische Materialien stets dem Angriff einer großen Zahl verschiedener Pilzarten ausgesetzt sind, so daß ein zuverlässiger Schutz nur durch die Anwendung von Fungiziden mit breitem Wirkungsspektrum zu erzielen ist oder mit Fungizidkombinationen, die so zusammengestellt sind, daß ein breites Wirkungsspektrum zustande kommt. Triazolfungizide mit lückenhaftem Wirkungsspektrum sind beispielsweise Triadimefon, Triadimenol, Dichlobutrazol (s. hierzu Tabelle 2 im Versuchsteil).

Es wurde gefunden, daß bestimmte 1-Aryl-3-hydroxy-3-alkyl-4-(1,2,4-triazol-1-yl)-butan-derivate der Formel

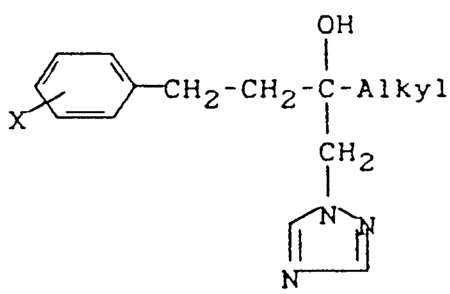

,

in welcher

X für Halogen, Alkylthio mit 1 bis 4 Kohlenstoffatomen oder Halogenalkoxy mit 1 oder 2 Kohlenstoffatomen und 1 bis 5 Halogenatomen steht und

Alkyl für eine Alkylgruppe mit 1 bis 4 Kohlenstoffatomen steht,

sowie deren Säureadditions-Salze und Metallsalz-Komplexe,

als Wirkstoffe in mikrobiziden Mitteln zum Schutz technischer Materialien vor Schädigung oder Zerstörung durch Mikroorganismen verwendet werden können.

Bevorzugt werden Verbindungen der vorgenannten allgemeinen Formel verwendet, in denen X für Halogen, wie Fluor, Chlor und Brom steht und Alkyl, Methyl, Ethyl, n-Propyl, iso-Propyl, n-Butyl, iso-Butyl sowie tert.-Butyl, bevorzugt Methyl, Ethyl und tert.-Butyl, bedeutet.

Ganz besonders bevorzugt verwendet werden die folgenden 1-Aryl-3-hydroxy-3-alkyl-4-(1,2,4-triazol-1-yl)-butan-derivate:

1-(4-Chlor)-phenyl-3-hydroxy-3-tert.-butyl-4-(1,2,4-triazol-1-yl)-butan,
1-(4-Brom)-phenyl-3-hydroxy-3-tert.-butyl-4-(1,2,4-triazol-1-yl)-butan sowie
1-(4-Fluor)-phenyl-3-hydroxy-3-tert.-butyl-4-(1,2,4-triazol-1-yl)-butan.

Die erfindungsgemäßen Verbindungen können mit folgenden Säuren Additionssalze bilden: Halogenwasserstoffsäuren, wie Chlorwasserstoffsäure und Bromwasserstoffsäure, ferner Phosphorsäure, Salpetersäure, Schwefelsäure, mono- und bifunktionelle Carbonsäuren, wie Essigsäure, Maleinsäure, Bernsteinsäure, Fumarsäure, Weinsäure, Citronensäure, Salicylsäure, Sorbinsäure und Milchsäure, sowie Sulfonsäuren, wie p-Toluolsulfonsäure und 1,5-Naphthalindisulfonsäure.

Folgende Metalle können mit den erfindungsgemäßen Verbindungen Metallsalz-Komplexe bilden: die Metalle der II. bis IV. Hauptgruppe und der I. und II. sowie IV. bis VIII. Nebengruppe des Periodensystems. Bevorzugt sind Kupfer, Zink, Mangan, Magnesium, Zinn, Eisen und Nickel.

Als Anionen der Salze kommen solche in Betracht, die sich vorzugsweise von folgenden Säuren ableiten: Halogenwasserstoffsäuren, wie Chlorwasserstoffsäure und Bromwasserstoffsäure, ferner Phosphorsäure, Salpetersäure und Schwefelsäure.

Die erfindungsgemäßen Aryl-3-hydroxy-3-alkyl-4-(1,2,4-triazol-1-yl)-butan-derivate sowie deren Säureadditionssalze und Metallsalz-Komplexe können nach bekannten Verfahren, z.B. wie in der EP 40345 angegeben, hergestellt werden.

Die erfindungsgemäßen Verbindungen der vorstehend genannten allgemeinen Formel weisen überraschenderweise im Gegensatz zu den strukturell vergleichbaren, bekannten Triazolfungiziden ein so breites

Wirkungsspektrum auf und sind so effektiv, daß sie mit Vorteil als Mikrobizide zum Schutz technischer Materialien verwendet werden können (s. hierzu die Vergleichstabelle 2). Sie verursachen keine Verfärbungen und sind mit allen bekannten Anstrichformulierungen verträglich (vgl. Beispiel 3).

Die erfindungsgemäßen Verbindungen stellen überraschenderweise darüber hinaus bessere, antimikrobiell wirksamere Materialschutzstoffe dar als die aus dem Stand der Technik bekannten Dithiocarbamate, die ebenfalls ein breites Wirkungsspektrum aufweisen und daher wirkungsmäßig die nächstliegende Verbindungsklasse darstellen. Sie sind aber nicht nur weniger effektiv als die erfindungsgemäßen Verbindungen, sondern naturgemäß auch weniger stabil als diese. Stabilität ist aber für Materialschutzstoffe eine besonders wichtige Eigenschaft (siehe hierzu Beispiel 3).

Technische Materialien sind erfindungsgemäß nicht lebende Materialien, die für die Verwendung in der Technik zubereitet worden sind. Beispielsweise können technische Materialien, die durch erfindungsgemäße Wirkstoffe vor mikrobieller Veränderung oder Zerstörung geschützt werden sollen, Klebstoffe, Leime, Papier und Karton, Textilien, Leder, Holz, Anstrichmittel und Kunststoffartikel, Kühlschmierstoffe und andere Materialien sein, die von Mikroorganismen befallen oder zersetzt werden können. Im Rahmen der zu schützenden Materialien seien auch Teile von Produktionsanlagen, beispielsweise Kühlwasserkreisläufe, genannt, die durch Vermehrung von Mikroorganismen beeinträchtigt werden können. Im Rahmen der vorliegenden Erfindung seien als technische Materialien vorzugsweise Klebstoffe, Leime, Papiere und Kartone, Leder, Holz, Anstrichmittel, Kühlschmiermittel und Kunststoffartikel genannt.

Als Mikroorganismen, die einen Abbau oder eine Veränderung der technischen Materialien bewirken können, seien beispielsweise Bakterien, Pilze, Hefen, Algen und Schleimorganismen genannt. Vorzugsweise wirken die erfindungsgemäßen Wirkstoffe gegen Pilze, insbesondere Schimmelpilze, holzverfärbende und holzzerstörende Pilze (Basidiomyceten), sowie gegen Schleimorganismen und Algen.

Es seien beispielsweise Mikroorganismen der folgenden Gattungen genannt:

Alternaria, wie Alternaria tenuis,
Aspergillus, wie Aspergillus niger,
Chaetomium, wie Chaetomium globosum,
Coniophora, wie Coniophora puteana,
Lentinus, wie Lentinus tigrinus,
Penicillium, wie Penicillium glaucum,
Polyporus, wie Polyporus versicolor,
Aureobasidium, wie Aureobasidium pullulans,
Sclerophoma, wie Sclerophoma pityophila,
Trichoderma, wie Trichoderma viride,
Escherichia, wie Escherichia coli,
Pseudomonas, wie Pseudomonas aeruginosa,
Staphylococcus, wie Staphylococcus aureus.

Je nach Anwendungsgebiet können die erfindungsgemäßen Wirkstoffe in die üblichen Formulierungen überführt werden, wie Lösungen, Emulsionen, Suspensionen, Pulver, Pasten und Granulate.

Diese können in an sich bekannter Weise hergestellt werden, z.B. durch Vermischen der Wirkstoffe mit einem Streckmittel, das aus flüssigem Lösungsmittel und/oder festen Trägerstoffen besteht, gegebenenfalls unter Verwendung von oberflächenaktiven Mitteln, wie Emulgatoren und/oder Dispergiermitteln, wobei gegebenenfalls im Falle der Benutzung von Wasser als Streckmittel organische Lösungsmittel wie Alkohole als Hilfsmittel verwendet werden können.

Flüssige Lösungsmittel für die Wirkstoffe können beispielsweise Wasser, Alkohole, wie niedere aliphatische Alkohole, vorzugsweise Ethanol oder Isopropanol, oder Benzylalkohol, Ketone, wie Aceton oder Methylethylketon, flüssige Kohlenwasserstoffe, wie Benzinfraktionen, halogenierte Kohlenwasserstoffe, wie 1,2-Dichlorethan, sein.

Die zum Schutz technischer Materialien verwendeten mikrobizide Mittel enthalten die Wirkstoffe im allgemeinen in einer Menge von 1 bis 95 Gew.-%, bevorzugt von 10 bis 75 Gew.-%.

Die Anwendungskonzentrationen der erfindungsgemäßen Wirkstoffe richten sich nach der Art und dem Vorkommen der zu bekämpfenden Mikroorganismen, sowie nach der Zusammensetzung des zu schützenden Materials. Die optimale Einsatzmenge kann durch Testreihen ermittelt werden. Im allgemeinen liegen die Anwendungskonzentrationen im Bereich von 0,001 bis 5 Gew.-%, vorzugsweise von 0,05 bis 1,0 Gew.-%, bezogen auf das zu schützende Material.

Die erfindungsgemäßen Wirkstoffe können auch in Mischung mit anderen bekannten Wirkstoffen vorliegen. Beispielsweise seien die folgenden Wirkstoffe genannt: Benzylalkoholmono(poly)hemiformal und andere Formaldehyd abspaltende Verbindungen, Benzimidazolyl-methylcarbamate, Tetramethylthiuramdisulfid, Zinksalze von Dialkyldithiocarbamaten, 2,4,5,6-Tetrachlorisophthalonitril, Thiazolylbenzimidazol, Mercaptobenzthiazol, 2-Thiocyanatomethylthiobenzthiazol, Methylenbisthiocyanat, Phenolderivate, wie 2-Phenylphenol, (2,2'-Dihydroxy-5,5'-dichlor)-diphenylmethan und 3-Methyl-4-chlor-phenol, Organo-Zinnverbindungen, N-Trihalogenmethylthio-verbindungen, wie Folpet, Fluorfolpet, Dichlofluanid.

## Anwendungsbeispiele

### Beispiel 1

Zum Nachweis der Wirksamkeit gegen Pilze werden die minimalen Hemm-Konzentrationen (MHK) von erfindungsgemäßen Wirkstoffen bestimmt:
Ein Agar, der aus Bierwürze und Pepton hergestellt wird, wird mit erfindungsgemäßen Wirkstoffen in Konzentrationen von 0,1 mg/l bis 5000 mg/l versetzt. Nach Erstarren des Agars erfolgt Kontamination mit Reinkulturen der in der Tabelle aufgeführten Testorganismen. Nach 2-wöchiger Lagerung bei 28 ° C und 60 bis 70 % rel. Luftfeuchtigkeit wird die MHK bestimmt. MHK ist die niedrigste Konzentration an Wirkstoff, bei der keinerlei Bewuchs durch die verwendete Mikrobenart erfolgt, sie ist in der nachstehenden Tabelle 1 angegeben. In Tabelle 2 sind MHK-Werte von Vergleichssubstanzen aufgeführt.

Tabelle 1 MHK's in mg/l bei der Einwirkung erfindungsgemäßer Substanzen auf Pilze

Substanz

| Testorganismen | I 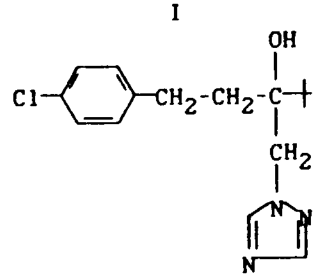 | II 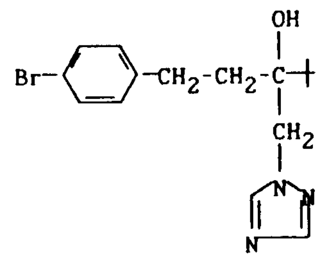 | III 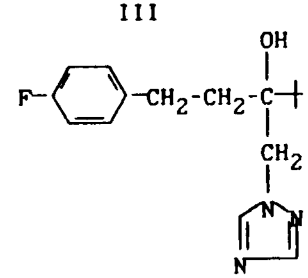 | I ·HCl | I ·1/2 Naphthalin-disulfonsäure | I ·Dodecylphenylsulfonsäure |
|---|---|---|---|---|---|---|
| Alternaria tenuis | 200 | 50 | | 150 | 500 | |
| Aspergillus niger | 10 | ‹20 | 75 | 35 | 50 | 75 |
| Aureobasidium pullulans | 35 | 35 | | 15 | 50 | |
| Chaetomium globosum | 15 | ‹20 | 35 | 35 | 50 | 50 |
| Cladosporium cladosporioides | 50 | | | | 20 | |
| Lentinus tigrinus | 10 | 20 | | 7,5 | 7,5 | |
| Penicillium glaucum | 15 | ‹20 | 35 | 15 | 20 | 35 |
| Sclerophoma pityophila | 5 | 2 | | 1,5 | 5 | |

+ = $-C(CH_3)_3$

Tabelle 2 (Vergleich) MHK's in mg/l bei der Einwirkung der Vergleichssubstanzen auf Pilze

| Testorganismen | Substanz | | | |
|---|---|---|---|---|
| | 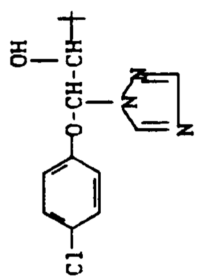 Triadimenol | 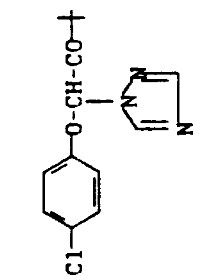 Triadimefon | 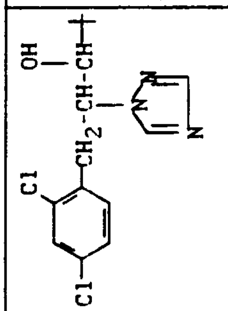 Dichlobutrazol | 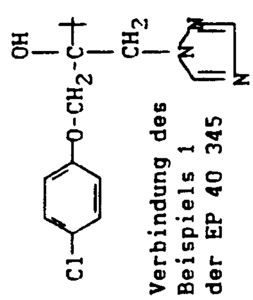 Verbindung des Beispiels 1 der EP 40 345 |
| Alternaria tenuis | >1000 | >5000 | >5000 | >1000 |
| Aspergillus niger | >5000 | >5000 | 5000 | 75 |
| Aureobasidium pullulans | 1000 | >5000 | >5000 | 200 |
| Chaetomium globosum | 200 | 200 | 5000 | 100 |
| Cladosporium cladosporioides | 500 | >1000 | 1000 | 200 |
| Lentinus tigrinus | 750 | 100 | 500 | 20 |
| Penicillium glaucum | 750 | >5000 | 5000 | 350 |

Beispiel 2

Eine Mischkultur von Grün-, Blau-, Braun- und Kieselalgen (Stichococcus bacillaris Naegeli, Euglena gracilis Klebs, Chlorella pyrenoidosa Chick, Phormidium foveolarum Gomont, Oscillatoria geminata Meneghini und Phae odactylum tricornutum Bohlin) wird unter Durchperlen von Luft in Allens Nährlösung (Arch. Mikrobiol. 17, 34 bis 53 (1952)), die auf 4 l steriles Wasser 0,2 g Ammoniumchlorid, 4,0 g Natriumnitrat, 1,0

g Dikaliumhydrogenphosphat, 0,2 g Calciumchlorid, 2,05 g Magnesiumsulfat und 0,02 g Eisenchlorid enthält, gegeben. Nach 2 Wochen ist die Nährlösung durch intensives Algenwachstum tief grün-blau gefärbt. Das Absterben der Algen nach Zugabe erfindungsgemäßer Wirkstoffe erkennt man an dem Entfärben der Nährlösung.

Tabelle 3

| Algen-abtötende Konzentrationen (mg/l) der unten angegebenen Substanzen | |
|---|---|
| Wirkstoffe aus Tabelle 1 | abtötende Konzentration in mg/l |
| I | 75 |
| II | 75 |
| III | 100 |
| I'HCl | 100 |

Beispiel 3

Prüfung der Schimmelfestigkeit von Anstrichen

Die Prüfung wird in Anlehnung an den Report 219 der Defense Standards Laboratories Maribyrnong/Australien wie folgt durchgeführt:
Das zu prüfende Anstrichmittel wird beidseitig auf eine geeignete Unterlage gestrichen.

Um praxisnahe Ergebnisse zu erhalten wird ein Teil der Prüflinge vor dem Test auf Schimmelfestigkeit mit fließendem Wasser (24 Std.; 20 ° C) ausgelaugt; ein anderer Teil wird mit einem warmen Frischluftstrom behandelt (7 Tage; 40 ° C).

Die so vorbereiteten Prüflinge werden auf einen Agar-Nährboden gelegt. Prüfling und Nährboden werden mit Pilzsporen kontaminiert. Nach 1- bis 3-wöchiger Lagerung bei 20 ± 1 ° C und 80-90 % rel. Luftfeuchte wird abgemustert. Der Anstrich ist dauerhaft schimmelfest, wenn der Prüfling pilzfrei bleibt oder höchstens einen geringen Randbefall erkennen läßt.

Zur Kontamination werden Pilzsporen folgender neun Schimmelpilze verwendet, die als Anstrichzerstörer bekannt sind oder häufig auf Anstrichen angetroffen werden:

1. Alternaria tenuis
2. Aspergillus flavus
3. Aspergillus niger
4. Aspergillus ustus
5. Cladosporium herbarum
6. Paecilomyces variotii
7. Penicillium citrinum
8. Aureobasidium pullulans
9. Stachybotrys atra Corda

In Proben einer handelsüblichen Dispersionsfarbe auf Basis von Polyvinylacetat werden, bezogen auf Gesamtfeststoffgehalt, 0 bis 1,5 % 1-(4-Chlorphenyl)-3-hydroxy-3-tert.-butyl-4-(1,2,4-triazol-1-yl)-butan (I) homogen verteilt.

Zum Vergleich werden Proben bereitet, die 0 bis 5 % Tetramethylthiuramdisulfid (TMTD) enthalten.

Aus den Anstrichmittelproben werden Anstriche hergestellt und nach der oben beschriebenen Methode auf Schimmelfestigkeit geprüft.

Ergebnis:
Anstriche, die 0,5 % I enthalten, sind auch nach oben erwähnten Belastungen hervorragend schimmelfest.

Hingegen sind TMTD-haltige Anstriche erst schimmelfest, wenn sie 4 % TMTD enthalten. Derartige Anstriche sind aber nach Belastung (Auslaugung) mit eisenhaltigem Wasser gelb verfärbt.

## Patentansprüche

1. Verwendung von 1-Aryl-3-hydroxy-3-alkyl-4-(1,2,4-triazol-1-yl)-butan-derivaten der Formel

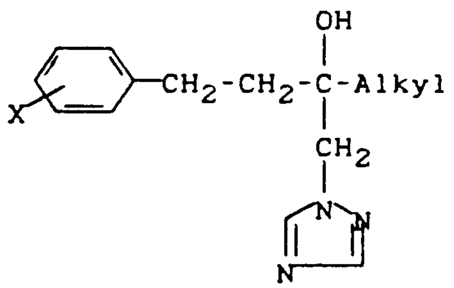
,

in welcher

X für Halogen, Alkylthio mit 1 bis 4 Kohlenstoffatomen oder Halogenalkoxy mit 1 oder 2 Kohlenstoffatomen und 1 bis 5 Halogenatomen steht und

Alkyl für eine Alkylgruppe mit 1 bis 4 Kohlenstoffatomen steht,

sowie deren Säureadditions-Salze und Metallsalz-Komplexe,

als Wirkstoffe in mikrobiziden Mitteln zum Schutz technischer Materialien vor Schädigung oder Zerstörung durch Mikroorganismen.

2. Verwendung nach Anspruch 1, dadurch gekennzeichnet, daß 0,001 bis 5 Gew.-% 1-Aryl-3-hydroxy-3-alkyl-4-(1,2,4-triazol-1-yl)-butan-derivate bezogen auf das zu schützende technische Material eingesetzt werden.

## Claims

1. Use of 1-aryl-3-hydroxy-3-alkyl-4-(1,2,4-triazol-1-yl)-butane derivatives of the formula

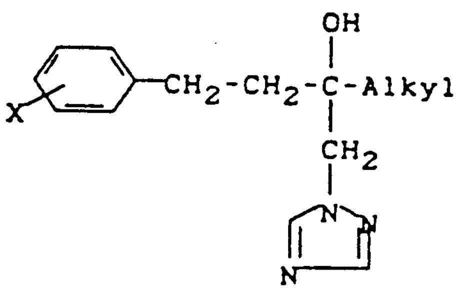

in which

X represents halogen, alkylthio having 1 to 4 carbon atoms, or halogenoalkoxy having 1 or 2 carbon atoms and 1 to 5 halogen atoms and

alkyl represents an alkyl group having 1 to 4 carbon atoms,

and also the acid addition salts and metal salt complexes thereof

as active compounds in microbicidal agents for the protection of industrial materials against damage or destruction by microorganisms.

2. Use according to Claim 1, characterised in that 0.001 to 5% by weight, relative to the industrial material to be protected, of 1-aryl-3-hydroxy-3-alkyl-4-(1,2,4-triazol-1-yl)-butane derivatives are employed.

## Revendications

1. Utilisation de dérivés de 1-aryl-3-hydroxy-3-alkyl-4-(1,2,4-triazole-1-yl)-butanes de formule :

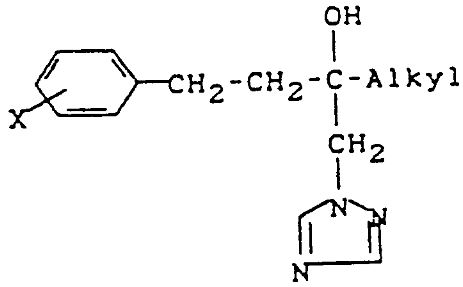

dans laquelle
X représente un halogène, un groupe alkylthio en $C_1$-$C_4$ ou halogénoalcoxy contenant un ou deux atomes de carbone et 1 à 5 atomes d'halogènes et
"Alkyl" représente un groupe alkyle en $C_1$-$C_4$,
et de leurs sels formés par addition avec des acides et complexes de sels métalliques en tant que substances actives dans des produits microbicides servant à protéger les matières industrielles contre les dommages ou les destructions provoqués par les micro-organismes.

2. Utilisation selon la revendication 1, caractérisée en ce que l'on utilise de 0,001 à 5 % en poids des dérivés de 1-aryl-3-hydroxy-3-alkyl-4-(1,2,4-triazole-1-yl)-butanes par rapport à la matière industrielle à protéger.